Europäisches Patentamt

European Patent Office

Office européen des brevets

(11) Veröffentlichungsnummer: **0 270 745**

**A1**

## (12) EUROPÄISCHE PATENTANMELDUNG

(21) Anmeldenummer: **87112636.3**

(22) Anmeldetag: **29.08.87**

(51) Int. Cl.⁴: **B60D 1/06**

(30) Priorität: **13.11.86 DE 8630405 U**

(43) Veröffentlichungstag der Anmeldung:
**15.06.88 Patentblatt 88/24**

(84) Benannte Vertragsstaaten:
**AT BE CH DE FR GB IT LI NL SE**

(71) Anmelder: **Dickmann, Thomas, Dr.-Ing.**
**Erich-Heckel-Strasse 63**
**D-7500 Karlsruhe 41(DE)**

(72) Erfinder: **Dickmann, Thomas, Dr.-Ing.**
**Erich-Heckel-Strasse 63**
**D-7500 Karlsruhe 41(DE)**

(74) Vertreter: **Trappenberg, Hans**
**Wendtstrasse 1**
**D-7500 Karlsruhe 21(DE)**

(54) **Kugelstange mit Kupplungskugel.**

(57) Die zum Aufsetzen einer Zugkugelkupplung bestimmte Kugelstange mit Kupplungskugel, wobei die
Kugelstange mittels einer Halterung, in der sie fest
oder lösbar gehalten ist, am Heck eines Fahrzeugs,
insbesondere eines PKW, anzubringen ist, wird bisher stets einstückig aus Vollmaterial geformt.

Zur vereinfachten Fertigung, zur besseren
Schweißbarkeit wie auch zur Verbesserung der Oberflächenbehandlung, insbesondere aber zur
Gewichtsreduzierung, wird nach der Erfindung
vorgeschlagen, daß die Kugelstange und/oder die
Kupplungskugel als Hohlkörper ausgeführt ist.

Fig. 2

EP 0 270 745 A1

## Kugelstange mit Kupplungskugel

Die Erfindung betrifft eine einstückig geformte Kugelstange mit Kupplungskugel zum Aufsetzen einer Zugkugelkupplung, wobei die Kugelstange mittels einer Halterung, in der sie fest oder lösbar gehalten ist, am Heck eines Fahrzeugs, insbesondere eines PKW, anbringbar ist.

Auf derartige Kupplungsglieder wirken unter Umständen äußerst hohe stoßartige Zug-und Druckbelastungen ein, denen sie auf jeden Fall, und zwar über ihre gesamte Lebensdauer, standhalten müssen. Um dies zu gewährleisten, wird die Kugelstange zusammen mit ihrer Kupplungskugel bisher einstückig aus Vollmaterial geformt, im allgemeinen im Wege des Gesenkschmiedens. Diese so geformte Kugelstange mit Kupplungskugel wird sodann an der Halterung befestigt oder, fest aber lösbar, in eine ent sprechend ausgebildete Halterung eingeschoben. Diese Halterungen bestehen in der Regel aus Blechen und Blechprofilen, die wiederum am Fahrzeugheck angebracht sind. Wird die Kugelstange fest mit der Halterung verbunden, so wird sie im allgemeinen mit diesen Blechteilen verschweißt. Das Verschweißen der verhältnismäßig dünnwandigen Bleche mit der aus Vollmaterial hergestellten Kugelstange stößt jedoch, da diese Paarung schweißtechnische sehr ungünstig ist, auf Schwierigkeiten. Wird die Kugelstange in eine entsprechende Halterung fest aber lösbar eingeschoben, so bereitet zumindest das Gewicht dieses zu manipulierenden Teils Schwierigkeiten. Auch bei der üblicherweise aufzubringenden Einbrennlackierung bereitet eine massive Kugelstange bezüglich des thermischen Verhaltens Schwierigkeiten. Abgesehen von diesen Schwierigkeiten entspricht auch die schwere massive Kugelstange nicht den modernen Anforderungen des Fahrzeugbaus hinsichtlich gewichtsgünstiger Bauweise. Andererseits darf allerdings auf die einstückige Formung der Kugelstange mit Kupplungskugel aus Sicherheitsgründen nicht verzichtet werden.

Aufgabe der Erfindung ist es daher, eine Kugelstange mit Kupplungskugel anzugeben, die den an diese Kupplungsglieder zu stellenden Sicherheitsanforderungen und Forderungen der wirtschaftlichen Herstellbarkeit gerecht wird, die aber die oben angeführten Nachteile vermeidet, also einfach zu manipulieren und auch schweißgünstig zu gestalten ist. Erreicht wird dies nach der Erfindung dadurch, daß die Kugelstange und/oder die Kupplungskugel ein Hohlkörper, vorzugsweise ein rundes oder unrundes Rohr ist.

Ein derartiger Hohlkörper weist selbstverständlich ein deutlich geringeres Gewicht auf, ist also besser manipulierbar, läßt sich aber auch deutlich besser mit der aus Blech bestehenden Halterung verschweißen. Gleichzeitig genügt eine derartige Konstruktion auch den Sicherheitsanforderungen, wobei selbstverständlich eine genügend groß dimensionierte Wandstärke des Hohlkörpers vorausgesetzt wird. Hierbei kann die Wandstärke des Hohlkörpers im Bereich der Kupplungskugel geringer ausgeführt werden, um die Formgebung der Kugel zu erleichtern und auch um damit das Gewicht weiter zu reduzieren. Gegenüber der aus Vollmaterial hergestellten Kugelstange mit Kupplungskugel kann dadurch zwar der Durchmesser beziehungsweise das Gesamtvolumen der Kugelstange geringfügig größer werden, jedoch macht sich in aller Regel diese Vergrößerung kaum bemerkbar, da die aus Blechen beziehungsweise Blechprofilen gebildete Halterung, um eine genügend große Steifigkeit aufzuweisen, auch einen entsprechenden Durchmesser beziehungsweise auch ein entsprechendes Volumen aufweisen muß.

Neben der Vermeidung der oben beschriebenen Nachteile weist eine derartige Konstruktion auch noch Fertigungsvorteile auf, insbesondere dann, wenn der Hohlkörper ein durch Reduzieren, also durch Rollen, Hämmern und/oder Drücken bearbeitetes Rohrstück ist. Durch diese Bearbeitung, die warm oder kalt durchgeführt werden kann, kann an das Rohrstück die Kupplungskugel angeformt und sodann der verbleibende Teil des Rohrstücks in die der Kugelstange vorgegebene Form gebracht werden. Eine weitere Möglichkeit besteht selbstverständlich auch darin, die Kugelstange von der der Kupplungskugel abgewandten Stirnseite aus auszuhöhlen, entweder durch Bohren oder indem dieser Teil des Kugelstangenschaftes gleich bei der Fertigung mit einem entsprechenden Hohlraum versehen wird.

Dieser Hohlraum kann nach und nach in das Vollmaterial der Kupplungskugel übergehen, so daß nur der Kugelstangenschaft als Hohlkörper ausgebildet ist. Durch diese Gestaltung ist zumindest eine schweißgünstige Konstruktion gegeben, wenn auch die angestrebte Gewichtsreduzierung nicht so vollkommen wie bei einem durchgehenden Rohrstück zu erzielen ist. Eine weitere Möglichkeit besteht darin, daß nur die Kugel als Hohlkörper ausgeführt wird und einstückig an den ansonsten massiven Schaft angeformt wird. Auch dadurch wird wieder eine teilweise Gewichtsreduzierung erzielt. Diese Ausführung erscheint vorteilhaft, vornehmlich in Verbindung mit dem teilweise ausgehöhlten Schaft. Somit ergibt sich eine Ausführung der Kugelstange mit hohler Kupplungskugel und teilweise massivem Schaft, die insbesondere in den Bereichen massiv ausgeführt ist, in denen die Belastung, wie beispielsweise in den Bögen, besonders hoch ist.

Im Rahmen der Erfindung liegt es auch, den Kugelstangenschaft als Hohlkörper auszubilden und endständig auf diesen hohlen Kugelstangenschaft ein zweckmäßigerweise ebenfalls hohles, als kugelförmiges Rotationsteil ausgebildetes Formteil aufzusetzen. Zwar wird dadurch die Kugelstange mit Kupplungskugel zweiteilig, jedoch werden die in das Formteil eingeleiteten Kräfte unmittelbar auf die Kugelstange weitergeleitet, wodurch sich ein günstiger Kraftverlauf ergibt.

Um das Eindringen von Feuchtigkeit und Schmutz zu vermeiden, kann der Hohlraum ein-oder beidseitig noch mit Deckeln aus Metall oder Kunststoff verschlossen werden.

Auf der Zeichnung sind Ausführungsbeispiele des Erfindungsgegenstandes schematisch dargestellt, und zwar zeigen:

Fig. 1 eine Ausführung mit hohlgebohrtem Kugelstangenschaft

Fig. 2 eine aus einem Rohrstück bestehende Ausführung,

Fig. 3 eine Ausführung mit aufgesetztem Formteil und

Fig. 4 eine Ausführung mit massiver Kugelstange und einstückig eingeformter hohler Kupplungskugel, die mit einem Deckel aus Kunststoff verschlossen ist.

Die aus Vollmaterial bestehende Kugelstange (1) mit Kupplungskugel (9) ist jenseits der Kupplungskugel (9) mit einer Längsbohrung (10) versehen. Über den Bereich dieser Längsbohrung (10) sind beidseits Haltebleche (2) angeschweißt (3), die jenseits mit einem am Fahrzeug angeordneten Querrohr (5) verschweißt (4) sind. Durch die Längsbohrung (10) ergibt sich in diesem Falle nicht nur eine Gewichtsreduzierung, sondern auch eine - schweißtechnisch günstigere Gestaltung, so daß das Anschweißen (3) der Bleche (2) nicht auf Schwierigkeiten stößt.

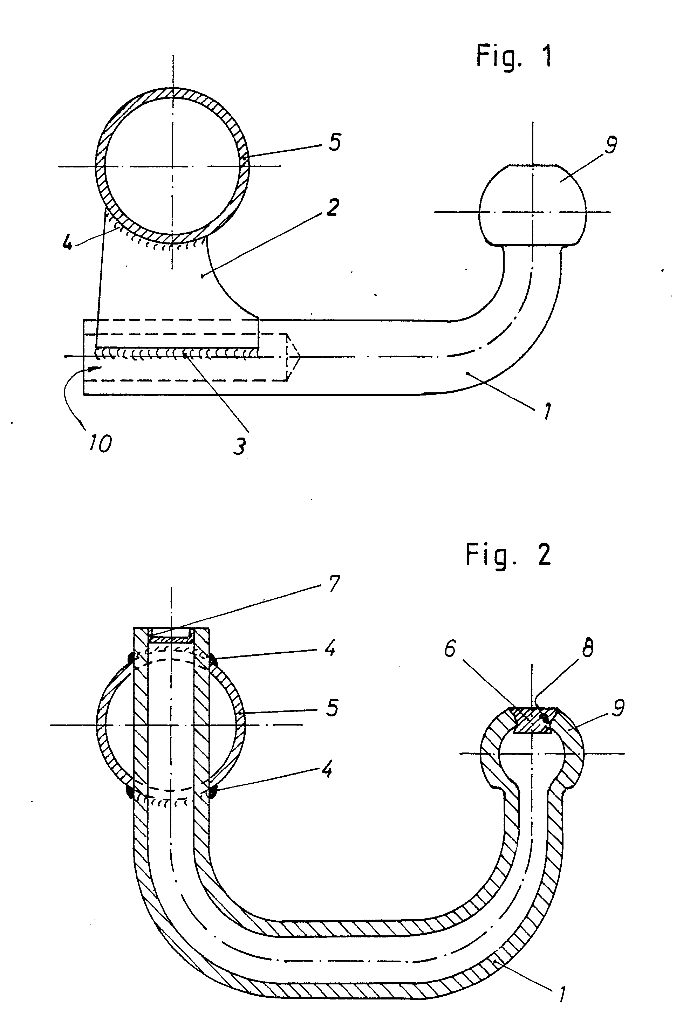

In Fig. 2 ist eine Ausführung gezeigt, bei der die Kugelstange (1) mitsamt ihrer Kupplungskugel (9) aus einem Rohrstück geformt ist. Diese Formung erfolgt auf wirtschaftliche Art und Weise durch Warm-oder Kaltverformen und anschließendes Biegen des die Kugelstange (1) bildenden Teils des Rohrstücks. Auch hier wiederum bildet das Verschweißen (4) dieser rohrförmigen Kugelstange (1) mit dem am Fahrzeug angebrachten Querrohr (5) keine Schwierigkeiten, da nur geringe Wandstärkendifferenzen vorliegen. Um das Eindrigen von Feuchtigkeit und Schmutz in das Rohrstück zu verhindern, sind Deckel (6, 7) aus Metall oder Kunststoff vorgesehen, die in die entsprechenden Öffnungen formschlüssig (8) eingefügt werden können.

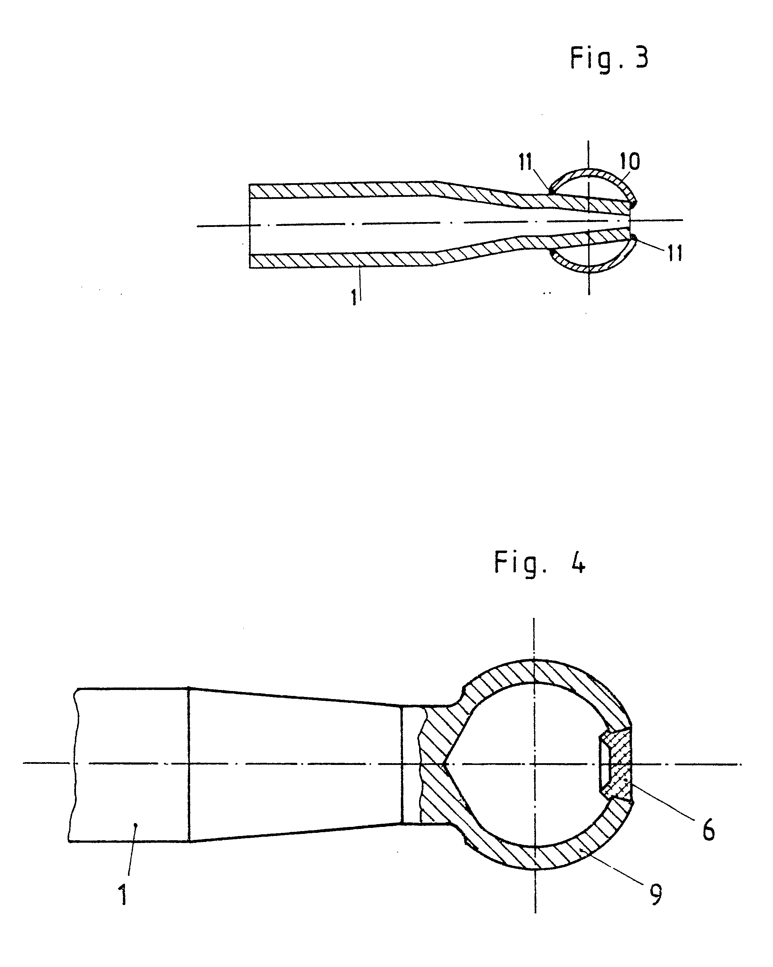

Fig. 3 zeigt eine Kugelstange (1), die wiederum durch Reduzieren eines Rohrstücks hergestellt wurde. Auf diese Kugelstange (1) ist ein Formteil (10) aufgesetzt und mit der Kugelstange verschweißt (11). Die Kugelstange (1) kann dann noch, wie zuvor beschrieben, in die gewünschte Form gebogen werden.

Fig. 4 schließlich zeigt eine massive Kugelstange (1) mit einer einstückig angeformten hohlen Kupplungskugel (9), die mit einem Deckel (6) aus Kunststoff verschlossen ist. Auch hierbei kann die Kugelstange (1), wie in Fig. 1 gezeigt, teilweise hohl sein.

Selbstverständlich besteht auch die Möglichkeit, die Kugelstange (1) auch an dem jenseits der Kugel liegenden Ende zu verformen, beispielsweise zu reduzieren, um sie den jeweiligen Befestigungsmöglichkeiten anzupassen.

In allen Fällen ist den Sicherheitsanforderungen dadurch genügt, daß die Kugelstange (1) mit ihrer Kupplungskugel (9) einstückig geformt ist, wobei noch darauf hinzuweisen ist, daß bei der Ausführung nach den Fig. 2 und 3, also bei der aus einem Rohrstück bestehenden Kugelstange (1), der Faserverlauf nicht durch eine spanende Formung gestört ist.

**Ansprüche**

1. Einstückig geformte Kugelstange mit Kupplungskugel zum Aufsetzen einer Zugkugelkupplung, wobei die Kugelstange mittels einer Halterung, in der sie fest oder lösbar gehalten ist, am Heck eines Fahrzeugs, insbesondere eines PKW, anbringbar ist,
dadurch gekennzeichnet,
daß die Kugelstange (1) und/oder die Kupplungskugel (9) ein Hohlkörper ist.

2. Kugelstange mit Kupplungskugel nach Anspruch 1, dadurch gekennzeichnet,
daß die Kupplungskugel (9) als Hohlkörper und die Kugelstange (1) teilweise hohl und teilweise massiv ausgeführt ist.

3. Kugelstange mit Kupplungskugel nach Anspruch 1, dadurch gekennzeichnet,
daß sowohl die Kupplungskugel (9) als auch die Kugelstange (1) als Hohlkörper ausgeführt sind, die Wandstärke der Kupplungskugel (9) aber geringer ist als die der Kugelstange (1).

4. Kugelstange mit Kupplungskugel nach einem oder mehreren der vorhergehenden Ansprüche, dadurch gekennzeichnet,
daß der Hohlkörper als rundes oder unrundes Rohr geformt ist.

5. Kugelstange mit Kupplungskugel nach Anspruch 4, dadurch gekennzeichnet,
daß der Hohlkörper ein durch Reduzieren (Rollen, Hämmern und/oder Drücken) bearbeitetes Rohrstück ist.

6. Kugelstange mit Kupplungskugel nach einem oder mehreren der vorhergehenden Ansprüche, dadurch gekennzeichnet,
daß die Kupplungskugel (9) ein auf die Kugelstange (1) aufgesetztes Formteil (10) ist.

7. Kugelstange mit Kupplungskugel nach einem oder mehreren der vorhergehenden Ansprüche, dadurch gekennzeichnet,
daß der Hohlraum durch aus Metall oder Kunststoff bestehende Deckel (6, 7) verschlossen ist.

Fig. 1

Fig. 2

## Fig. 3

## Fig. 4

Europäisches
Patentamt

EUROPÄISCHER RECHERCHENBERICHT

Nummer der Anmeldung

EP 87 11 2636

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 255 509 (O. RICHLE) <br> * Insgesamt * | 1-2,4-6 | B 60 D 1/06 |
| A | | 3 | |
| | --- | | |
| P,X | DE-U-8 615 090 (T. DICKMANN) <br> * Seite 13, Absatz 2; Figuren 1,7-8 * | 1,2,4 | |
| A | | 3,7 | |
| | --- | | |
| X | DE-A-2 210 871 (WESTFALIA-WERKE) <br> * Insgesamt * | 1,6 | |
| A | | 2 | |
| | --- | | |
| X | US-A-2 768 848 (THE FULTON CO.) <br> * Insgesamt * | 1,6-7 | |
| | --- | | |
| X | US-A-3 463 513 (C. BURTON) <br> * Spalte 2, Zeilen 36-61; Figuren 1-3 * | 1,4 | |
| | ----- | | |

RECHERCHIERTE SACHGEBIETE (Int. Cl.4)

B 60 D
B 21 D

Der vorliegende Recherchenbericht wurde für alle Patentansprüche erstellt

| Recherchenort | Abschlußdatum der Recherche | Prüfer |
|---|---|---|
| DEN HAAG | 19-02-1988 | LINTZ C.H. |